# EUROPEAN PATENT SPECIFICATION

(11) **EP 1 560 483 B1**
(45) Date of publication and mention of the grant of the patent: **22.11.2006**
(21) Application number: 03772279.0
(22) Date of filing: 30.10.2003
(51) Int. Cl.: A01G 7/04, F21V 7/00

(54) **LUMINAIRE FOR PLANT IRRADIATION AND METHOD**
BELEUCHTUNGSVORRICHTUNG ZUR PFLANZENBESTRAHLUNG UND VERFAHREN
LUMINAIRE POUR IRRADIATION DE PLANTES ET SON PROCEDE D'UTILISATION

(30) Priority: 04.11.2002 NL 1021826
(43) Date of publication of application: 10.08.2005
(73) Proprietor: Jedré Beheer B.V., 5731 KB Mierlo (NL)
(72) Inventor: Wijbenga, Hendrik, NL-5705 BX Helmond (NL); ENTROP, Jean Paul, NL-5705 BX HELMOND (NL); SOOLS, Franciscus, Guillaume, Peter, NL-5705 BX Helmond (NL)
(74) Representative: Mulder, Cornelis A.M.
(86) International application number: PCT/EP2003/012064
(87) International publication number: WO 2004/040963

(56) References cited:
- EP-A- 0 563 890
- EP-A- 1 225 390
- DE-A- 4 336 023
- DE-U- 8 312 948
- NL-C- 191 857
- US-A- 5 192 129

## Description

The invention relates to a luminaire for plant irradiation comprising:
- a reflector provided with:
   a light emission window;
   a plane of symmetry transverse to the light emission window;
   side reflectors having a substantially straight outer edge and facets extending along the outer edge, which side reflectors are concave transversely to the outer edge and are arranged on either side of the plane of symmetry, bounding the light emission window with their outer edge;
   a main reflector at a distance from the side reflectors, opposite the light emission window, which main reflector has facets which extend substantially parallel to the outer edge, and which main reflector has a concave portion on either side of the plane of symmetry with a smallest distance to the light emission window in the plane of symmetry; and
   mutually opposed end walls which connect the side reflectors and the main reflector to one another; and
- a lamp holder with a centerline substantially in the plane of symmetry for accommodating an electric lamp L along the light emission window.

The invention also relates to a method of irradiating plants with light, wherein a luminaire is used.

An embodiment of such a luminaire is known from Dutch patent 191 857.

The known luminaire is designed for being suspended at a small height, approximately 0.8 to 1 m, in rows above plants in hothouses so as to promote their growth through irradiation. The light generated by the accommodated lamp is formed into a beam and radiated at comparatively wide angles to the plane of symmetry, approximately 2 x 70 degrees, so as to irradiate a comparatively wide field. The directly radiated light, i.e. radiated without previous reflection at the side reflectorsw and/or the main reflector, also issues at said wide angles. The lamp, therefore, projects from the light emission window, beyond the side reflectors. The lamp is also visible in horizontal direction at the side of the side reflectors facing away from the light emission window. As a result, the luminaire emits stray light at very wide angles to the perpendicular, up to above the horizontal level. This stray light is not or substantially not utilized for plant growth and accordingly reduces the lighting efficiency of the luminaire, and is unpleasant for people working in the hot houses.

The side reflectors are situated substantially on a cylinder shell which closely envelops the accommodated lamp. The outer edges are close together, at a distance of approximately twice the diameter of the lamp: 2 x 48 mm.

The known luminaire is open both under the lamp and above the lamp. The generated heat is partly removed by natural flow of air through the luminaire. A result of this is, however, that dirt is deposited on the lamp, which strongly increases the quantity of stray light. The luminaire has a plastic housing which covers the reflector.

A high lighting efficiency of the luminaire and a homogeneous distribution are important for a good and regular growth of the plants, such that the plants present receive the same lighting and have the same growing rate, reach the flowering stage simultaneously, or have ripe fruit simultaneously. To achieve this distribution, the main reflector has outermost facets which are directed towards a plane of symmetry. The lighting efficiency of the luminaire is also of major importance for deriving the benefit from the cost of the installation and the consumed power. The known luminaire has a comparatively low light output ratio (LOR) of approximately 75%, i.e a comparatively small proportion of the generated light is radiated in the beam.

The lamp in the known luminaire is a 400 W high-pressure sodium discharge lamp with an E40 base. High-pressure sodium discharge lamps usually have a hard-glass cylindrical outer bulb with a diameter of approximately 48 mm. An elongate cylindrical ceramic discharge vessel is centrally positioned in the outer bulb, in which vessel an electrical discharge takes place in sodium vapor at a comparatively high temperature during operation. Such lamps are highly suitable for plant irradiation because the generated light has a comparatively large spectral component which is necessary for photosynthesis. The lamps, however, also generate much heat, which renders ventilation necessary. Although the known luminaire is open at the top and bottom, it does assume a comparatively high temperature during operation with a lamp of 400 W.

It is a disadvantage of the known luminaire that it generates stray light and that it has a comparatively low light output ratio.

It is a disadvantage of the method in which the known luminaire is used that stray light is generated and that the method leads to a comparatively low light output ratio, while a comparatively small portion of the generated light irradiates the plants.

It is a first object of the invention to provide a luminaire of the kind described in the opening paragraph which effectively counteracts stray light in operation and which has a comparatively high light output ratio.

It is a second object of the invention to provide a method of the kind mentioned in the opening paragraph whereby stray light is effectively counteracted and a high light output ratio is obtained.

According to the invention, this object is achieved in that the lamp holder is positioned such that the electric lamp L is substantially entirely accommodated between the side reflectors, and
the side reflectors have a comparatively great mutual distance at their outer edges and each have a side step at a distance from the light emission window for reducing their mutual distance stepwise.

Since the lamp L is substantially entirely accommodated between the side reflectors, stray light from the lamp is effectively counteracted. The luminaire is nevertheless capable of radiating light at comparatively wide angles without previous reflection owing to the fact that the side reflectors are wide apart with their outer edges. Directly radiated light, i.e. light without the losses resulting from reflection, contributes to the maxima of the light beam as a result of the above. The luminaire is particularly efficient also as a result of this.

The luminaire has additional advantages owing to its widely spaced side reflectors: the burning lamp sucks a comparatively large flow of air through the light emission window into the luminaire owing to the heat generation, which air flows along the main reflector to the exterior again, so that the luminaire has a good cooling; and there is comparatively much space between the accommodated lamp and the side reflectors, which counteracts the effect that reflected light and reflected heat radiation pass partly through the lamp. This prevents both a temperature rise of the lamp - which leads to an initially higher, but subsequently lower luminous efficacy and a shorter lamp life - as well as light losses owing to reflections in and on the lamp.

Side reflectors that are simply wide apart without further measures would adversely affect the operation of the main reflector and would prevent the main reflector from reflecting upwardly directed light rays directly originating from the lamp at wide angles towards the plants over a comparatively large centrally located portion of its surface. The inward side step in the side reflectors achieves that the facets of the side reflectors situated above the side steps come closer together, while maintaining the slope desirable for forming the light beam. The side step itself has no or substantially no direction which is useful for beam shaping. The central portion of the main reflector is capable of reflecting incident light along the outside over the side reflectors thanks to the side step, whereby reflection on the surface of the side reflectors facing the lamp, and thus the loss-generating double reflection, is prevented to a high degree.

In general, the outer edges have a mutual distance in a region between 140 and 220 mm, also in dependence on the width of the beam to be generated for which the luminaire was designed.

The construction of the reflector in addition renders it possible for the luminaire to be compact, which is of importance if daylight is to be intercepted to a low degree only. The surface area of the perpendicular projection of the luminaire in a horizontal plane is a measure for its compactness. It is advantageous to give the luminaire a light-colored, for example white coating at its outer surface, so that laterally incident daylight is scattered and benefits plant growth.

In a favorable embodiment, the main reflector becomes substantially continuously farther removed from the light emission window in directions away from the plane of symmetry on either side of this plane of symmetry. The main reflector in this embodiment has no wide, downward outermost facets directed towards the plane of symmetry, as in the known luminaire. A convection flow can thus leave the luminaire easily, without being decelerated. This has a favorable influence on the temperature of the luminaire during operation. A temperature of only 75°C was measured centrally at the upper side of the main reflector when it was provided with a lamp of no less than 600 W.

The convection flow through the luminaire can be still further improved in that the distance between the main reflector and the accommodated lamp is chosen to be comparatively great, for example greater than 25 mm, for example 32 mm.

It is favorable if the side reflectors are located substantially in respective planes P through the centerline at the areas of the respective steps. In that case, substantially exclusively grazing light hits the side step in the respective area from the centerline of the lamp holder, at the same time the centerline of an accommodated lamp; in other words, the side step has a very small width viewed from the lamp. On the other hand, the side reflectors then constitute no or substantially no obstacle at their outer sides to the emission of light reflected by the main reflector. If the side step were entirely invisible from the lamp, and accordingly received no direct light at all from the lamp, the outer surface of the facet below the side step would constitute an obstacle to the light originating from the main reflector. If the side step were directed such that it is visible from the lamp, the facet below the side step would be smaller and accordingly less effective, while the side step itself would make a contribution of little practical use to the beam.

It is favorable if the end walls approach one another in a direction towards the main reflector. This provides a widening of the radiated beam in and parallel to the plane of symmetry. The end walls may enclose an angle with one another of, for example, 10° to 20°, for example 15°.

In an advantageous embodiment, the lamp holder is positioned substantially outside the reflector. This embodiment is advantageous because in this case the lamp holder is not exposed to heat radiation and remains comparatively cool, but also because the lamp holder then does not intercept light rays. A major advantage is, however, that the luminaire can be more compact as a result, i.e. the distance between the end walls can be shorter.

It is furthermore advantageous if the reflector and the lamp holder are detachably interconnected, in particular can be detached without tools. The reflector may then be easily separated from the lamp holder with the lamp so as to clean the reflector and the lamp. The lamp holder may be fastened to the reflector, for example, by means of a bayonet fixture.

It is favorable if the lamp holder is accommodated in a housing with electrical circuitry, which housing is connected to the reflector with sliding possibility. In an embodiment, said housing, which is comparatively heavy because of its components, such as a starter, a ballast, a capacitor, and an anti-interference filter, and which has a connection, for example, to the power mains, is fixedly suspended, and the reflector is supported thereby and connected thereto with sliding possibility.

The housing may have, for example, a guide rail, from which the reflector is suspended.

The guide rail may extend to beyond the reflector. It is favorable if the rail is so long that the reflector can be shifted far enough along the rail so as to be fully free from the lamp. The reflector may be removed, if so desired, before being cleaned.

The reflector may be covered by a reflector housing so as to have a smooth surface at the outer side of the main reflector for preventing accumulation of dirt and moisture.

The luminaire according to the invention is suitable for being hung in rows, for example in hothouses, for use in the irradiation of plants with light. It may then be suspended at a comparatively great height above the plants, such that the luminaire hangs at a level of between 1.60 and 3.20 m above the plants. The luminaire is capable of irradiating a comparatively large surface area, so that comparatively few luminaires are necessary for a given hothouse. The luminaire has a high efficiency of at least 90% if a highly reflecting material is used such as, for example, semi-high-brightness aluminum, for example material commercially available under the designation Miro, and has a very high homogeneity of plant irradiation. The Eₘᵢₙ/Eₘₐₓ ratio is above 0.80.

The second object of the invention is accordingly achieved in that the luminaire according to the invention is used.

These and other aspects of the invention are apparent from and will be elucidated with reference to the embodiments described hereinafter.
In the drawings:
Fig. 1 shows an embodiment in perspective view;
Fig. 2 shows the embodiment of Fig. 1 partly cut away;
Fig. 3 is a cross-sectional view of the reflector taken on the line III-III in Fig. 2;
Fig. 4 is a light distribution diagram of the luminaire of the preceding Figures in the plane of drawing of Fig. 3; and
Fig. 5 is a cross-sectional view as in Fig. 3 of a second embodiment.

The Figures are purely diagrammatic and not drawn to scale. Notably, some dimensions are shown in a strongly exaggerated form for the sake of clarity. Similar components in the Figures are denoted as much as possible by the same reference numerals.

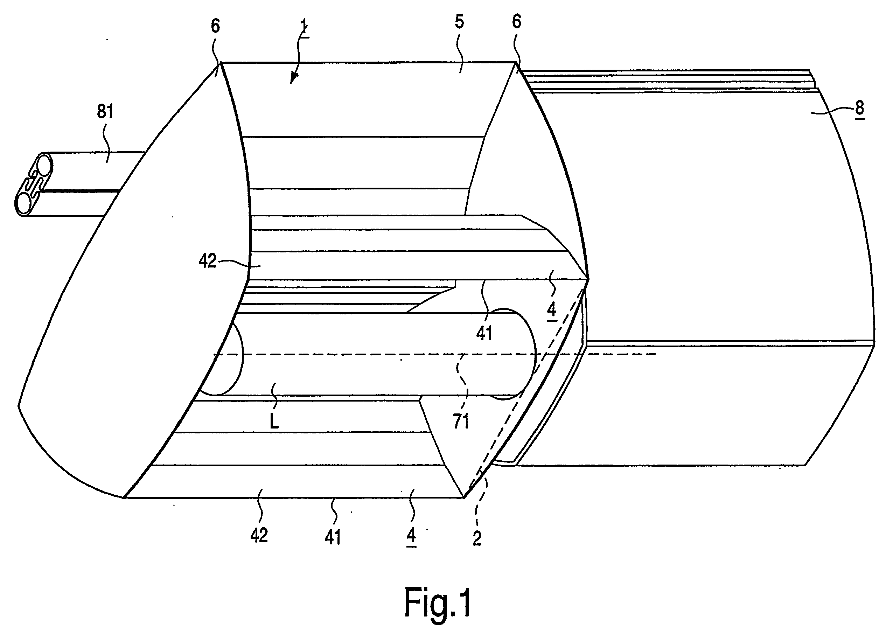

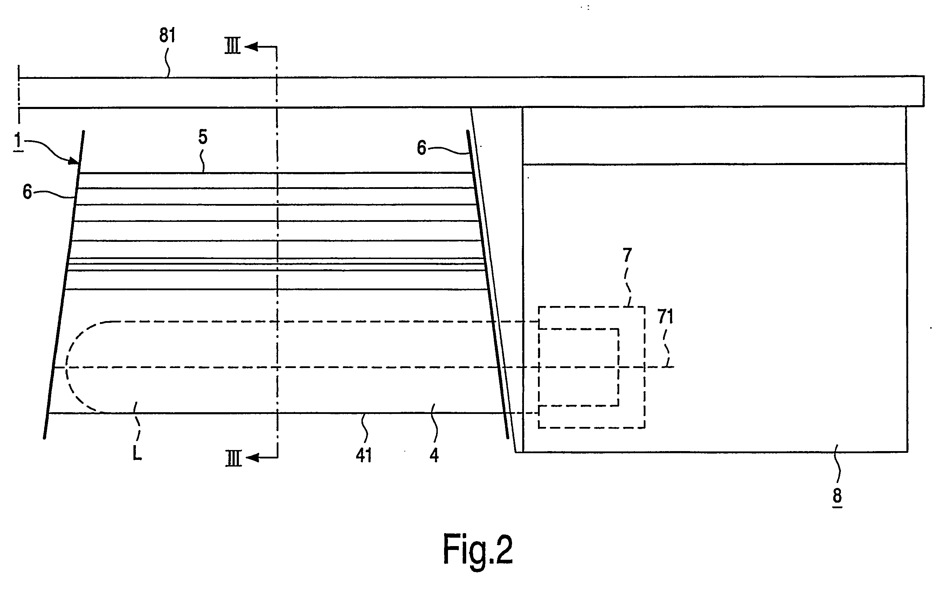

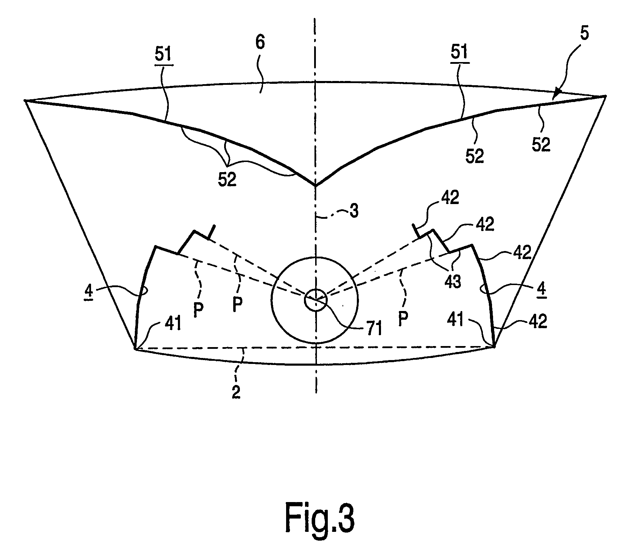

In Figs. 1 and 2, the luminaire for plant irradiation has a reflector 1, see also Fig. 3, which comprises a light emission window 2 and a plane of symmetry 3 transverse to the light emission window 2. The reflector 1 has side reflectors 4 with respective substantially straight outer edges 41 and facets 42 extending along the outer edges 41. The side reflectors 4 are concave transversely to the outer edge 41, are arranged on either side of the plane of symmetry 3, and bound the light emission window 2 with their outer edge 41. The metal reflector housing covering the reflector 1 has been removed in Fig. 2.

A main reflector 5, see Fig. 3, is at a distance from the side reflectors, opposite the light emission window 2. The main reflector 5 has facets 52 which extend substantially parallel to the outer edge 41. The main reflector 5 has a concave portion 41 on either side of the plane of symmetry 3 with a smallest distance to the light emission window 2 in the plane of symmetry 3. The reflector 1 has mutually opposed end walls 6 which interconnect the side reflectors 4 and the main reflector 5.

The luminaire has a lamp holder 7 with a centerline 71 substantially in the plane of symmetry 3 for accommodating an electric lamp L along the light emission window 2. A 600 W high-pressure sodium discharge lamp is accommodated in the Figure, in which lamp a discharge tube is centrally arranged with a 115 mm long discharge arc in operation.

The lamp holder 7 is positioned such that the electric lamp L is substantially entirely positioned between the side reflectors 4, see Figs. 2 and 3. The side reflectors 4 have a comparatively great mutual distance at their outer edges 41, approximately 170 mm in the Figure. They each have a side step 43 at a distance from the light emission window 2 so as to reduce their mutual distance stepwise.

Fig. 3 shows that the main reflector 5 becomes substantially continuously further removed from the light emission window 2 on either side of the plane of symmetry 3 in directions away from the plane of symmetry 3.

The side reflectors 4 each lie substantially in a respective plane P through the centerline 71 at the area of the side step 43. Fig. 3 shows that the side reflectors 4 in the embodiment drawn each have two such side steps 43.

The Figure shows that the luminaire has a comparatively great distance between the lamp L and the main reflector 5. In general this distance will exceed half the lamp diameter. Said distance is approximately 32 mm in the embodiment. The great distance is favorable for good ventilation and a comparatively low temperature of the main reflector 5. The luminaire according to the invention as a result is capable of accommodating a lamp of 1000 W.

The end walls 6, see Fig. 2, approach one another in a direction towards the main reflector 5. They enclose an angle of 15° with one another.

The lamp holder 7 is arranged substantially outside the reflector 1. The lamp holder 7 is accommodated in a metal housing 8 containing electrical circuitry. The reflector 1 and the lamp holder 7 are interconnected in a detachable manner, i.e they can be detached without tools. In the drawings, the lamp holder 7 is connected to the reflector 1 with sliding possibility.

The housing 8 in which the lamp holder 7 is accommodated has a guide rail 81 from which the reflector 1 is suspended, see Fig. 1. The guide rail 81 extends to beyond the reflector 1, see Figs. 1 and 2. Given a sufficient length of the rail 81 and/or a correct positioning of the point of suspension of the reflector 1, said reflector 1 hanging from the rail can be moved away so far from the housing 8 that the lamp L emerges entirely from the reflector 1. Fig. 2 shows that the detachability, i.e. slidability of the reflector 1 renders it possible for the end walls 6 to be so close together that the lamp L is longer than the distance between the end walls 6 at the area of the lamp L. The luminaire is very compact also as a result of this.

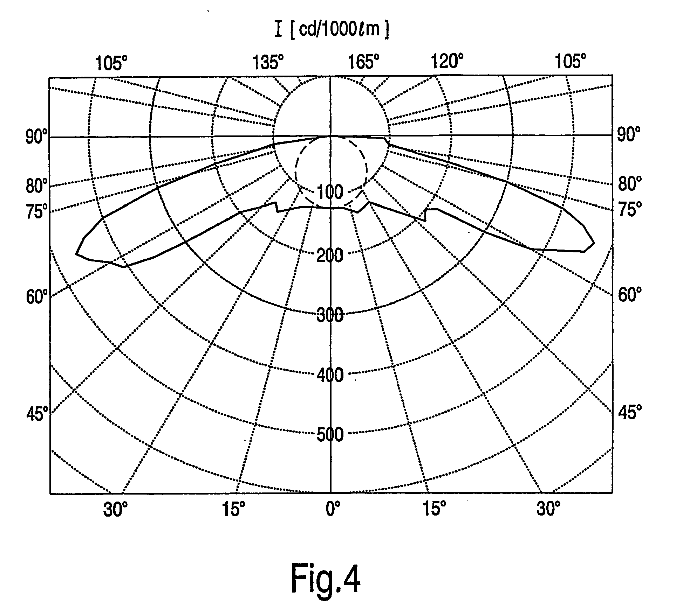

It is apparent from Fig. 4 that the luminaire of the preceding Figures in conjunction with the lamp provides a light beam with maxima at angles of 2 x 68°. Little light is radiated in the plane of symmetry 3, which coincides with the ordinate of Fig. 4, as well as at small angles to said plane, because the plants are comparatively close there. As the angle increases, the luminous intensity increases strongly because it is directed at plants situated farther away. The region in and immediately around the plane of symmetry 3 is mainly hit by light directly radiated by the lamp. Directly radiated light also contributes to the maxima, but added to this is light from the side reflectors 4. Light reflected by the main reflector 5 mainly hits the maximum and directions at greater angles to the plane of symmetry 3.

Light radiated at the angles around the maxima may also be utilized for irradiating plant portions at a comparatively low level situated directly below an adjoining luminaire.

The luminaire shown has an efficiency or light output ratio, LOR, of 92.3%. The homogeneity of the illuminated field, Eₘᵢₙ/Eₘₐₓ, is 0.91 in a plane 2.80 m below the luminaire and 0.94 in a plane 3.20 m below the luminaire.

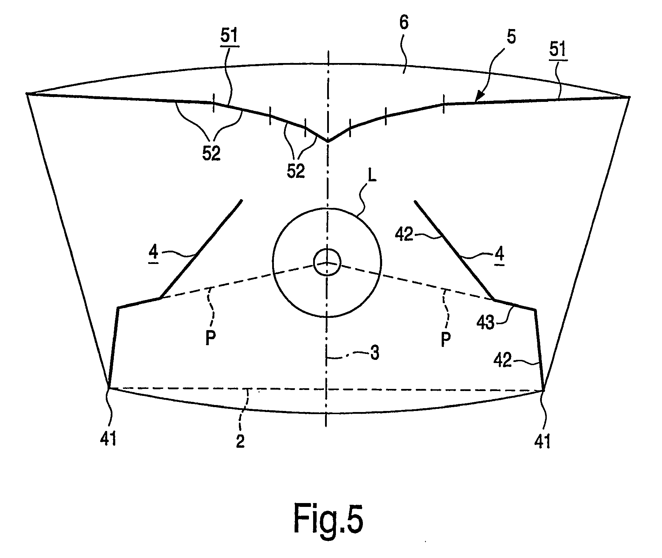

In Fig. 5, components corresponding to those in the preceding Figures have been given the same reference numerals.

The reflector 1 has only one side step 43 in each of its side reflectors 4. The outer edges 41 are approximately 200 mm apart. The lamp is placed comparatively deeply inside the reflector 1. The luminaire with this reflector 1 supplies a light beam with maxima at approximately 55° to the plane of symmetry 3. This renders the luminaire suitable for use in hothouses in which the rows of luminaires are suspended more closely together.

The features of the luminaire described may also be present in combinations other than those apparent from the ensuing claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A luminaire for plant irradiation comprising:
- a reflector (1) provided with:
a light emission window (2);
a plane of symmetry (3) transverse to the light emission window (2);
side reflectors (4) having a substantially straight outer edge (41) and facets (42) extending along the outer edge (41), which side reflectors (4) are concave transversely to the outer edge (41) and are arranged on either side of the plane of symmetry (3);
a main reflector (5) at a distance from the side reflectors (4), opposite the light emission window (2), which main reflector (5) has facets (52) which extend substantially parallel to the outer edge (41), and which main reflector (5) has a concave portion (51) on either side of the plane of symmetry (3) with a smallest distance to the light emission window (2) in the plane of symmetry (3); and
mutually opposed end walls (6) which connect the side reflectors (4) and the main reflector (5) to one another; and
- a lamp holder (7) with a centerline (71) substantially in the plane of symmetry (3) for accommodating an electric lamp L along the light emission window (2), the lamp holder (7) being positioned such that the electric lamp L is substantially entirely accommodated between the side reflectors (4),
**characterized in that**
the side reflectors (4) bound the light emission window (2) with their outer edge (41), have a comparatively great mutual distance at their outer edge (41) and each have a side step (43) at a distance from the light emission window (2) for reducing their mutual distance stepwise.

2. A luminaire as claimed in claim 1, **characterized in that** the main reflector (5) becomes substantially continuously farther removed from the light emission window (2) in directions away from of the plane of symmetry (3) on either side of this plane of symmetry (3).

3. A luminaire as claimed in claim 1 or 2, **characterized in that** the side reflectors (4) are substantially located in respective planes P through the centerline (71) at the areas of the respective steps (43).

4. A luminaire as claimed in claim 1 or 2, **characterized in that** the end walls (6) approach one another in a direction towards the main reflector (5).

5. A luminaire as claimed in claim 1, **characterized in that** the lamp holder (7) is positioned substantially outside the reflector (1).

6. A luminaire as claimed in claim 1 or 5, **characterized in that** the reflector (1) and the lamp holder (7) are detachably interconnected, in particular can be detached without tools.

7. A luminaire as claimed in claim 6, **characterized in that** the lamp holder (7) is accommodated in a housing (8) with electrical circuitry, which housing (8) is connected to the reflector (1) with sliding possibility.

8. A luminaire as claimed in claim 7, **characterized in that** the housing (8) has a guide rail (81) from which the reflector (1) is suspended.

9. A luminaire as claimed in claim 8, **characterized in that** the guide rail (81) extends to beyond the reflector (1).

10. A method of irradiating plants in which a luminaire is used, **characterized in that** the luminaire as claimed in any one of the preceding claims is used.

## Patentansprüche

1. Eine Beleuchtungsanlage für die Irradiation von Pflanzen die beinhaltet:
- ein Reflektor (1) ausgestattet mit:
einem Leuchtfenster (2);
einer Ebene der Symmetrie (3) die quer zu dem Leuchtfenster verläuft (2);
Seitenreflektoren (4) die einen äußeren Rand (41) haben der im Wesentlichen gerade ist und Facetten (42) die am äußeren Rand (41) entlang verlaufen, wobei die besagten Seitenreflektoren (4) quer zu dem äußeren Rand (41) konkav sind und zur beiden Seiten der Ebene der Symmetrie (3) angeordnet sind;
einem Hauptreflektor (5) in einer Entfernung von den Seitenreflektoren (4) gegenüber dem Leuchtfenster (2), wobei der besagte Hauptreflektor (5) Facetten (52) hat die sich im Wesentlichen parallel zu dem äußeren Rand (41) erstrecken und der besagte Hauptreflektor (5) eine konkave Partie (51) hat zur beiden Seiten der Ebene der Symmetrie (3); und
mit einander gegenüberliegenden Außenwände (6) die die Seitenreflektoren (4) mit dem Hauptreflektor (5) verbinden; und
- eine Lampenfassung (7), mit einer sich im Wesentlichen in der Ebene der Symmetrie (3) befindlichen Mittellinie (71), die eine elektrische Birne L das Leuchtfenster (2) entlang halten kann, wobei die besagte Lampenfassung (7) sich in einer solchen Position befindet, dass die elektrische Birne L sich im Wesentlichen kontinuierlich ganz zwischen den Seitenreflektoren (4) befindet,
**dadurch gekennzeichnet dass** die Seitenreflektoren (4), die das Leuchtfenster (2) mit ihren äußeren Rändern (41) begrenzen, einen, an ihren äußeren Rändern (41) verhältnismäßig großen, gegenseitigen Abstand haben und dadurch dass jeder einen seitlichen Zwischenraum (43) in einer Entfernung von dem Leuchtfenster (2) hat für die schrittweise Reduzierung des gegenseitigen Abstandes zwischen den Seitenreflektoren.

2. Eine Beleuchtungsanlage gemäss dem Anspruch 1, **dadurch gekennzeichnet dass** der Hauptreflektor (5) sich im Wesentlichen kontinuierlich weiter vom dem Leuchtfenster (2) entfernt, in Richtungen die sich von der Ebene der Symmetrie (3) entfernen, zur beiden Seiten der besagten Ebene der Symmetrie (3).

3. Eine Beleuchtungsanlage gemäss dem Anspruch 1 oder 2, **dadurch gekennzeichnet dass** die Seitenreflektoren (4) sich im Wesentlichen auf jeweiligen Ebenen P durch die Mittellinie (71) hindurch befinden, im Bereich der jeweiligen seitlichen Zwischenräume (43).

4. Eine Beleuchtungsanlage gemäss dem Anspruch 1 oder 2, **dadurch gekennzeichnet dass** die Außenwände (6) sich einander näheren in einer Richtung zu dem Hauptreflektor (5).

5. Eine Beleuchtungsanlage gemäss dem Anspruch 1, **dadurch gekennzeichnet dass** die Lampenfassung (7) sich im Wesentlichen außerhalb des Reflektors (1) befindet.

6. Eine Beleuchtungsanlage gemäss dem Anspruch 1 oder 5, **dadurch gekennzeichnet dass** der Reflektor (1) und die Lampenfassung (7) in einer trennbaren Weise gegenseitig verbunden sind und insbesondere getrennt werden können ohne Werkzeug.

7. Eine Beleuchtungsanlage gemäss dem Anspruch 6, **dadurch gekennzeichnet dass** die Lampenfassung (7) sich in einem Gehäuse (8) mit einem elektrischen Schaltschema befindet, wobei das besagte Gehäuse (8) mit dem Reflektor (1) verbunden ist, mit der Möglichkeit ihn schieben zu lassen.

8. Eine Beleuchtungsanlage gemäss dem Anspruch 7, **dadurch gekennzeichnet dass** das Gehäuse (8) eine Schiene (81) hat, an der der Reflektor (1) aufgehängt ist.

9. Eine Beleuchtungsanlage gemäss dem Anspruch 8, **dadurch gekennzeichnet dass** die Schiene (81) sich an dem Reflektor (1) vorbei erstreckt.

10. Ein Verfahren für die Irradiation von Pflanzen unter Anwendung einer Beleuchtungsanlage, **dadurch gekennzeichnet dass** die Beleuchtungsanlage gemäss einem der vorhergehenden Ansprüche benutzt wird.

## Revendications

1. Un luminaire pour l'irradiation des plantes comprenant :
- un réflecteur (1) pourvu de :
une fenêtre d'émission de lumière (2) ;
un plan de symétrie (3) transverse à la fenêtre d'émission de lumière (2) ;
réflecteurs latéraux (4) ayant un bord extérieur (41) qui en substance est droit et des facettes (42) longeant le bord extérieur (41), lesdits réflecteurs latéraux (4) étant concaves transversalement au bord extérieur (41) et étant disposés des deux côtés du plan de symétrie (3) ;
un réflecteur principal (5) à une distance des réflecteurs latéraux (4) en face de la fenêtre d'émission de lumière (2), ledit réflecteur principal (5) ayant des facettes (52) s'étendant en substance parallèlement au bord extérieur (41) et ledit réflecteur principal (5) ayant une partie concave (51) des deux côtés du plan de symétrie (3) ; et
de parois extérieurs s'opposant mutuellement (6) reliant les réflecteurs latéraux (4) au réflecteur principal (5) ; et
- une douille (7) avec une ligne médiane (71) en substance dans le plan de symétrie (3) pouvant contenir une ampoule électrique L le long de la fenêtre d'émission de lumière (2), ladite douille (7) étant positionnée de telle façon que l'ampoule électrique L se trouve en substance continuellement en entier entre les réflecteurs latéraux (4),
étant **caractérisée en ce que** les réflecteurs latéraux (4), délimitant la fenêtre d'émission de lumière (2) avec leurs bords extérieurs (41), ont une distance mutuelle comparativement grande à leurs bords extérieurs (41) et **en ce que** chacun des réflecteurs latéraux a un écart latéral (43) à une distance de la fenêtre d'émission de lumière (2) pour la réduction graduelle de la distance mutuelle entre les réflecteurs latéraux.

2. Un luminaire selon la revendication 1, **caractérisé en ce que** le réflecteur principal (5) s'éloigne en substance continuellement plus de la fenêtre d'émission de lumière (2) dans des directions qui s'éloignent du plan de symétrie (3), des deux côtés dudit plan de symétrie (3).

3. Un luminaire selon la revendication 1 ou 2, **caractérisé en ce que** les réflecteurs latéraux (4), sont en substance placés sur des plans respectifs P à travers la ligne médiane (71) dans l'espace des écarts latéraux respectifs (43).

4. Un luminaire selon la revendication 1 ou 2, **caractérisé en ce que** les parois extérieurs (6) s'approchent l'une de l'autre dans une direction vers le réflecteur principal (5).

5. Un luminaire selon la revendication 1, **caractérisé en ce que** la douille (7) se trouve en substance en dehors du réflecteur (1).

6. Un luminaire selon la revendication 1 ou 5, **caractérisé en ce que** le réflecteur (1) et la douille (7) sont mutuellement reliés de façon détachable et surtout peuvent être détachés sans outils.

7. Un luminaire selon la revendication 6, **caractérisé en ce que** la douille (7) se trouve dans un boîtier (8) avec un schéma des connexions électriques, ledit boîtier (8) étant relié au réflecteur (1) avec une possibilité de le faire coulisser.

8. Un luminaire selon la revendication 7, **caractérisé en ce que** le boîtier (8) a une coulisse (81) de laquelle le réflecteur (1) est suspendu.

9. Un luminaire selon la revendication 8, **caractérisé en ce que** la coulisse (81) s'étend au-delà du réflecteur (1).

10. Une méthode d'irradiation de plantes utilisant un luminaire, **caractérisée en ce que** le luminaire selon chacune des revendications précédentes est utilisé.
